# EUROPEAN PATENT SPECIFICATION

(11) **EP 4 127 487 B1**
(45) Date of publication and mention of the grant of the patent: **17.07.2024**
(21) Application number: 21718928.1
(22) Date of filing: 02.03.2021
(51) Int. Cl.: F15B 11/16, F15B 21/14

(54) **A LOAD SENSING CONTROL SYSTEM AND A METHOD FOR CONTROLLING A HYDRAULIC SYSTEM**
LASTFÜHLENDES STEUERSYSTEM UND VERFAHREN ZUR STEUERUNG EINES HYDRAULIKSYSTEMS
SYSTÈME DE COMMANDE DE DÉTECTION DE CHARGE ET PROCÉDÉ DE COMMANDE DE SYSTÈME HYDRAULIQUE

(30) Priority: 24.03.2020 FI 20205294
(43) Date of publication of application: 08.02.2023
(73) Proprietor: Lappeenrannan-Lahden teknillinen yliopisto LUT, 53851 Lappeenranta (FI)
(72) Inventor: HANDROOS, Heikki, 53851 LAPPEENRANTA (FI); PYRHÖNEN, Juha, 53851 LAPPEENRANTA (FI)
(74) Representative: Väänänen, Janne Kalervo
(86) International application number: PCT/FI2021/050153
(87) International publication number: WO 2021/191494

(56) References cited:
- EP-A1- 2 775 150
- EP-A1- 3 567 166
- WO-A1-2015/094024
- DE-A1- 102016 217 541
- FR-A1- 3 005 703
- US-A1- 2016 084 274

## Description

### Field of the invention

The invention relates to a load sensing "LS" control system for controlling a hydraulic system. Furthermore, the invention relates to a method for controlling a hydraulic system. Furthermore, the invention relates to a hydraulic system.

### Background

Many hydraulic systems comprise a controllable hydraulic pump whose operation is adapted in accordance with required flow rate of hydraulic fluid, e.g. hydraulic oil, at an output of the hydraulic pump and/or in accordance with required pressure at the output of the hydraulic pump. The controllable hydraulic pump can be for example a swash plate piston pump, whose displacement can be controlled by adjusting a slanting angle of a swash plate in accordance with required flow rate and/or pressure. An inconvenience related to hydraulic systems of the kind described above is that adjusting the slanting angle requires time and thus there is a need to maintain a significant pressure margin which enables a sufficiently fast response to load increases but which causes pressure differences over one or more flow restriction valves during normal operation. The pressure differences over the one or more flow restriction valves cause throttling losses in the hydraulic system and thereby they reduce the energy efficiency of the hydraulic system.

Publication US9976549 describes a hydraulic system that comprises hydraulic lines which form a hydraulic circuit. Hydraulically driven actuators which are supplied with pressure via the hydraulic circuit are connected to the hydraulic circuit. The hydraulic system comprises a hydraulic pump that is connected to the hydraulic circuit. The hydraulic pump is driven with an electric machine, and torque produced by the electric machine is controlled in accordance with pressure prevailing in the hydraulic circuit. Furthermore, the torque is limited in accordance with a maximum allowable pressure of the hydraulic circuit. An inconvenience related to this hydraulic system is that there can be significant pressure losses in control valves which conduct hydraulic fluid between the hydraulic circuit and the hydraulically driven actuators. These pressure losses cause throttling losses in the hydraulic system and thereby they reduce the energy efficiency of the hydraulic system.

Publication WO2015094024A1 describes a hydraulic system of a working machine. The hydraulic system comprises a pump for providing hydraulic fluid for driving an actuator, and a hydraulic accumulator. The hydraulic accumulator is arranged to provide a hydraulic fluid pressure for generating a load sensing signal for controlling the hydraulic fluid pressure delivered by the pump.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In this document, the word "geometric" when used as a prefix means a geometric concept that is not necessarily a part of any physical object. The geometric concept can be for example a geometric point, a straight or curved geometric line, a geometric plane, a non-planar geometric surface, a geometric space, or any other geometric entity that is zero, one, two, or three dimensional.

In accordance with the invention, there is provided a new load sensing control system for controlling a hydraulic system. A load sensing control system according to the invention comprises:
- at least one pressure sensor configured to measure pressure of at least one hydraulic cylinder of the hydraulic system,
- a torque controlled electric drive configured to drive a hydraulic pump of the hydraulic system, and
- a controller configured to produce a torque reference for the torque controlled electric drive based on a sum of a predetermined pressure margin and the measured pressure of the at least one hydraulic cylinder.

Furthermore, the controller is configured to receive a status signal indicative of a state of a non-return valve of the hydraulic system on an output side the hydraulic pump, and to stop the torque controlled electric drive in response a situation in which the non-return valve is closed.

As the measured pressure is pressure prevailing in a hydraulic cylinder, the torque reference is controlled in accordance with pressure that is driving an actuator operated by the hydraulic system. Thus, a need to decrease the pressure of the hydraulic cylinder with the aid of a control valve between the hydraulic pump and the hydraulic cylinder is reduced and thereby throttling losses in the control valve can be reduced.

In an exemplifying case where the hydraulic pump is configured to supply pressure to many hydraulic cylinders, the load sensing control system comprises advantageously many pressure sensors configured to measure pressures of the hydraulic cylinders individually, and the controller is configured to select the maximum of the measured pressures and to produce the torque reference based on a sum of the predetermined pressure margin and the maximum of the measured pressures. Also, in this exemplifying case, a need to decrease the pressures of the hydraulic cylinders with the aid of control valves is minimized and thereby throttling losses in the control valves can be reduced.

Furthermore, as the torque of the torque controlled electric drive can be changed rapidly, the above-mentioned predetermined pressure margin can be small and thus a need for pressure control carried out with valves of the hydraulic system is reduced and thereby throttling losses in the valves are reduced, too.

In accordance with the invention, there is provided also a new load sensing hydraulic system that comprises:
- at least one hydraulic cylinder configured to drive at least one actuator,
- a hydraulic pump configured to pump hydraulic fluid to the at least one hydraulic cylinder,
- a valve system configured to control flow of the hydraulic fluid to the at least one hydraulic cylinder in accordance with control actions directed to the valve system,
- a non-return valve on an output side the hydraulic pump, and
- a load sensing control system according to the invention and configured to drive the hydraulic pump.

In accordance with the invention, there is provided also a new method for controlling a hydraulic system. A method according to the invention comprises:
- measuring pressure of at least one hydraulic cylinder of the hydraulic system,
- producing a torque reference for a torque controlled electric drive based on a sum of a predetermined pressure margin and the measured pressure,
- driving a hydraulic pump of the hydraulic system with the torque controlled electric drive, and
- receiving a signal indicative of a state of a non-return valve of the hydraulic system on an output side the hydraulic pump, and stopping the torque controlled electric drive in response a situation in which the non-return valve is closed.

Exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying embodiments when read in conjunction with the accompanying drawings.

The verbs "to comprise" and "to include" are used in this document as open limitations that neither exclude nor require the existence of also un-recited features.

The features recited in the accompanied dependent claims are mutually freely combinable unless otherwise explicitly stated. Furthermore, it is to be understood that the use of "a" or "an", i.e. a singular form, throughout this document does not exclude a plurality.

### Brief description of the figures

Exemplifying and non-limiting embodiments and their advantages are explained in greater detail below in the sense of examples and with reference to the accompanying drawings, in which:
figure 1 illustrates an exemplifying hydraulic system that comprises a load sensing control system according to an exemplifying and non-limiting embodiment, and
figure 2 shows a flowchart of a method according to an exemplifying and non-limiting embodiment for controlling a hydraulic system.

### Description of exemplifying and non-limiting embodiments

The specific examples provided in the description below should not be construed as limiting the scope and/or the applicability of the accompanied claims. Lists and groups of examples provided in the description are not exhaustive unless otherwise explicitly stated.

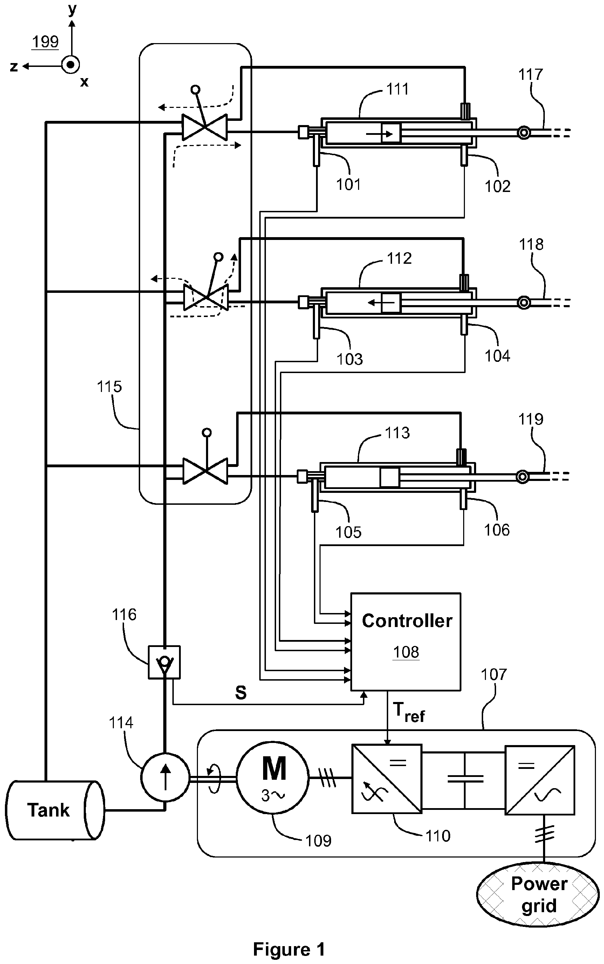

Figure 1 illustrates an exemplifying hydraulic system that comprises a load sensing control system according to an exemplifying and non-limiting embodiment. In this exemplifying case, the hydraulic system comprises hydraulic cylinders 111, 112, and 113 that are configured to drive actuators 117, 118, and 119, respectively. In figure 1, the actuators 117-119 are depicted only partially. The hydraulic system comprises a hydraulic pump 114 configured to pump hydraulic fluid, e.g. hydraulic oil, to the hydraulic cylinders 111-113. The hydraulic pump 114 can be for example a constant-volume hydraulic pump such as e.g. a bent axis pump, a radial piston pump, a gear pump, or a rotary vane pump. It is however also possible that the hydraulic pump 114 is a variable volume hydraulic pump such as e.g. a swash plate piston pump, whose displacement can be controlled by adjusting a slanting angle of a swash plate. The hydraulic system comprises a valve system 115 configured to control flows of the hydraulic fluid to the hydraulic cylinders 111-113 in accordance with control actions directed to the valve system. In this exemplifying case, the valve system 115 comprises valves each of which is suitable for controlling a respective one of the hydraulic cylinders so that a piston in the hydraulic cylinder can be driven in the positive z-direction of a coordinate system 199 or in the negative z-direction of the coordinate system 199, or the piston can be stationary.

The load sensing control system comprises pressure sensors 101, 102, 103, 104, 105, and 106. The pressure sensors 101 and 102 are configured to measure pressures acting on different sides of the piston of the hydraulic cylinder 111, the pressure sensors 103 and 104 are configured to measure pressures acting on different sides of the piston of the hydraulic cylinder 112, and the pressure sensors 105 and 106 are configured to measure pressures acting on different sides of the piston of the hydraulic cylinder 113. The load sensing control system comprises a torque controlled electric drive 107 configured to drive the hydraulic pump 114. In this exemplifying case, the torque controlled electric drive 107 comprises an alternating current "AC" electric machine 109 and a power converter 110 configured to control torque produced by the AC electric machine 109. The AC electric machine 109 can be for example an induction machine, a permanent magnet synchronous machine, an electrically excited synchronous machine, a synchronous reluctance machine, a switched reluctance machine, or a flux-switching permanent magnet machine. The power converter 110 can be for example an inverter configured to produce alternating voltages such that the AC electric machine 109 generates desired torque. The torque controlled electric drive 107 can be a vector-controlled drive which provides a fast torque response. It is however also possible that the torque controlled electric drive 107 comprises a direct current "DC" machine and a power converter for controlling direct current supplied to the DC machine.

The load sensing control system comprises a controller 108 that is configured to produce a torque reference T_{ref} for the torque controlled electric drive 107. In this exemplifying case where the hydraulic pump 114 is configured to supply pressure to more than one hydraulic cylinder, the controller 108 is configured to select the maximum of the measured pressures and to produce the torque reference T_{ref} based on a sum of a predetermined pressure margin and the maximum of the measured pressures. The pressure margin can be determined based on e.g. ability of the torque controlled electric drive 107 to respond to fast changes in the torque reference and on foreseeable fast changes in forces to be produced by the hydraulic cylinders 111-113. As the pressures are measured from the hydraulic cylinders 111-113, the torque reference is controlled in accordance with a maximum pressure that is factually driving one of the actuators 117-119 operated by the hydraulic system. This mitigates a need to decrease the pressures of the hydraulic cylinders 111-113 with the aid of the valve system 115 and thereby throttling losses in the valve system 115 are reduced. Furthermore, as the torque of the torque controlled electric drive 107 can be changed rapidly, the above-mentioned predetermined pressure margin can be small, which also decreases a need to reduce the pressures of the hydraulic cylinders 111-113 with the aid of the valve system 115 and thereby throttling losses in the valve system 115 are reduced.

The exemplifying hydraulic system illustrated in figure 1 comprises a non-return valve 116 on an output side the hydraulic pump 114. The non-return valve 116 prevents the hydraulic fluid from flowing in a reverse direction towards the hydraulic pump 114. The non-return valve 116 makes it possible to stop the hydraulic pump 114 when there is no need for a flow of the hydraulic fluid, because the non-return valve 116 prevents a reverse flow and thus the hydraulic pump 114 does not need to be driven for compensating for internal leakages of the hydraulic pump 114.

The controller 108 is configured to receive a status signal S indicative of a state of the non-return valve 116, and to stop the torque controlled electric drive 107 in response a situation in which the non-return valve 116 is closed.

It is also possible that the above-mentioned non-return valve 116 is a controllable non-return valve that can be forced to be open also when the hydraulic fluid flows towards the hydraulic pump 114 through the controllable non-return valve. This makes it possible to drive the hydraulic system in a regenerative mode so that the hydraulic pump 114 acts as a hydraulic motor that rotates the electric machine 109 and thus the electric machine 109 acts as a generator. In the regenerative mode, a work done by an external force directed to one of the pistons of the hydraulic cylinders 111-113 is converted to electric energy. The controllable non-return valve may comprise e.g. a hydraulic cylinder, an electromagnetic actuator, or some other control actuator with the aid of which the non-return valve can be forced to be open even if the hydraulic fluid flows towards the hydraulic pump 114. The controller 108 can be configured to operate the controllable non-return valve in accordance with statuses of the hydraulic cylinders, loads of the hydraulic cylinders, and/or control actions given by a user and/or a higher-level control of the hydraulic system.

The implementation of the controller 108 can be based on one or more analogue circuits, one or more digital processing circuits, or a combination thereof. Each digital processing circuit can be a programmable processor circuit provided with appropriate software, a dedicated hardware processor such as for example an application specific integrated circuit "ASIC", or a configurable hardware processor such as for example a field programmable gate array "FPGA". Furthermore, the controller 108 may comprise one or more memory circuits each of which can be for example a random-access memory "RAM" circuit.

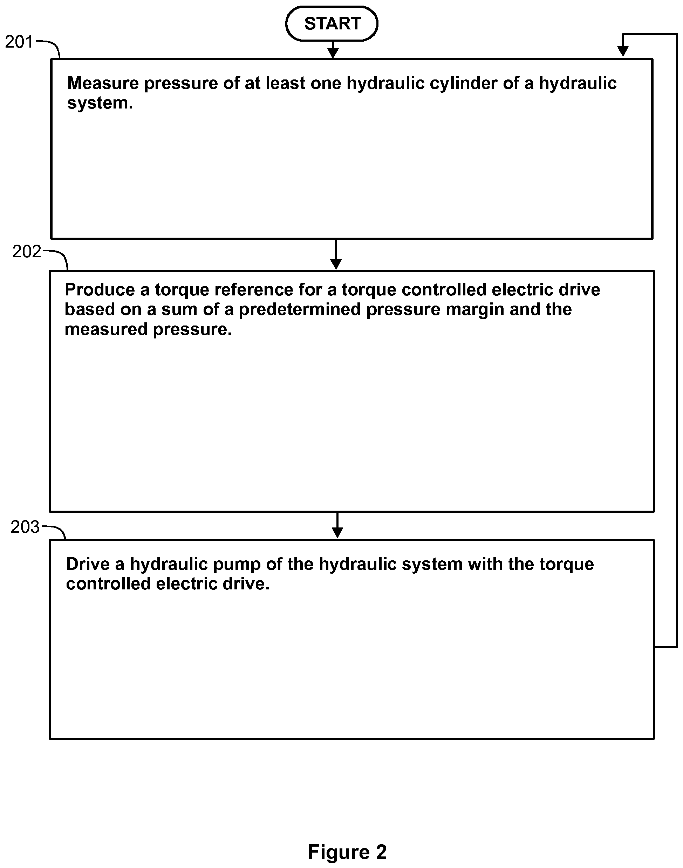

Figure 2 shows a flowchart of a method according to the invention for controlling a hydraulic system. The method comprises the following actions:
- action 201: measuring pressure of at least one hydraulic cylinder of the hydraulic system,
- action 202: producing a torque reference for a torque controlled electric drive based on a sum of a predetermined pressure margin and the measured pressure, and
- action 203: driving a hydraulic pump of the hydraulic system with the torque controlled electric drive.

A method according to an exemplifying and non-limiting embodiment comprises measuring pressures of two or more hydraulic cylinders of the hydraulic system, selecting the maximum of the measured pressures, and producing the torque reference based on a sum of the predetermined pressure margin and the maximum of the measured pressures.

A method according to the invention comprises receiving a signal indicative of a state of a non-return valve on an output side the hydraulic pump, and stopping the torque controlled electric drive in response a situation in which the non-return valve is closed.

In a method according to an exemplifying and non-limiting embodiment, the torque controlled electric drive comprises an alternating current electric machine and a power converter that controls torque produced by the alternating current electric machine.

In a method according to an exemplifying and non-limiting embodiment, the hydraulic pump is a constant-volume hydraulic pump such as e.g. a bent axis pump, a radial piston pump, a gear pump, or a rotary vane pump.

The specific examples provided in the description given above should not be construed as limiting the scope and/or the applicability of the accompanied claims. Lists and groups of examples provided in the description given above are not exhaustive unless otherwise explicitly stated.

## Claims

1. A load sensing control system for controlling a hydraulic system, the load sensing control system comprising:
- at least one pressure sensor (101-106) configured to measure at least one pressure of the hydraulic system, and
- a torque controlled electric drive (107) configured to drive a hydraulic pump of the hydraulic system,
wherein the measured at least one pressure is pressure of at least one hydraulic cylinder of the hydraulic system, and the load sensing control system comprises a controller (108) configured to produce a torque reference (T_{ref}) for the torque controlled electric drive based on a sum of a predetermined pressure margin and the measured pressure, **characterized in that** the controller is configured to receive a status signal (S) indicative of a state of a non-return valve of the hydraulic system on an output side the hydraulic pump, and to stop the torque controlled electric drive in response a situation in which the non-return valve is closed.

2. A load sensing control system according to claim 1, wherein the at least one pressure sensor is one of two or more pressure sensors configured to measure pressures of two or more hydraulic cylinders of the hydraulic system, and the controller is configured to select a maximum of the measured pressures and to produce the torque reference based on a sum of the predetermined pressure margin and the maximum of the measured pressures.

3. A load sensing control system according to claim 1 or 2, wherein the torque controlled electric drive comprises an alternating current electric machine (109) and a power converter (110) configured to control torque produced by the alternating current electric machine.

4. A hydraulic system comprising:
- at least one hydraulic cylinder (111-113) configured to drive at least one actuator,
- a hydraulic pump (114) configured to pump hydraulic fluid to the at least one hydraulic cylinder,
- a valve system (115) configured to control a flow of the hydraulic fluid to the at least one hydraulic cylinder in accordance with control actions directed to the valve system,
- a non-return valve (116) on an output side the hydraulic pump, and
- a load sensing control system according to any one of claims 1-3 and configured to drive the hydraulic pump.

5. A hydraulic system according to claim 4, wherein the at least one hydraulic cylinder is one of two or more hydraulic cylinders configured to drive two or more actuators, the hydraulic pump is configured to pump hydraulic fluid to the two or more hydraulic cylinders, the valve system is configured to control flows of the hydraulic fluid to the two or more hydraulic cylinders, and the load sensing control system is according to claim 2.

6. A hydraulic system according to claim 4, wherein the non-return valve is a controllable non-return valve comprising a control actuator operable to force the controllable non-return valve to allow a flow in a reverse direction of the controllable non-return valve.

7. A hydraulic system according to any one of claims 4-6, wherein the hydraulic pump is a constant-volume hydraulic pump.

8. A hydraulic system according to any one of claims 4-7, wherein the hydraulic pump is a bent axis pump.

9. A hydraulic system according to any one of claims 4-7, wherein the hydraulic pump is a radial piston pump.

10. A hydraulic system according to any one of claims 4-7, wherein the hydraulic pump is a gear pump.

11. A hydraulic system according to any one of claims 4-7, wherein the hydraulic pump is a rotary vane pump.

12. A method for controlling a hydraulic system, the method comprising:
- measuring (201) at least one pressure of the hydraulic system, and
- driving (203) a hydraulic pump of the hydraulic system with a torque controlled electric drive,
wherein the measured at least one pressure is pressure of at least one hydraulic cylinder of the hydraulic system, and the method comprises producing (202) a torque reference for the torque controlled electric drive based on a sum of a predetermined pressure margin and the measured pressure, **characterized in that** the method comprises receiving a signal indicative of a state of a non-return valve of the hydraulic system on an output side the hydraulic pump, and stopping the torque controlled electric drive in response a situation in which the non-return valve is closed.

13. A method according to claim 12, wherein the measuring the pressure of the at least one hydraulic cylinder is a part of activity that comprises measuring pressures of two or more hydraulic cylinders of the hydraulic system, and the method comprises selecting a maximum of the measured pressures and producing the torque reference based on a sum of the predetermined pressure margin and the maximum of the measured pressures.

## Patentansprüche

1. Lastfühlendes Steuersystem zur Steuerung eines Hydrauliksystems, wobei das lastfühlende Steuersystem umfasst:
- mindestens einen Drucksensor (101-106), der dazu ausgelegt ist, mindestens einen Druck des Hydrauliksystems zu messen, und
- einen drehmomentgesteuerten Elektroantrieb (107), der dazu ausgelegt ist, eine Hydraulikpumpe des Hydrauliksystems anzutreiben,
wobei der gemessene mindestens eine Druck ein Druck mindestens eines Hydraulikzylinders des Hydrauliksystems ist, und das lastfühlende Steuersystem eine Steuerung (108) umfasst, die dazu ausgelegt ist, eine Drehmomentreferenz (T_{ref}) für den drehmomentgesteuerten Elektroantrieb basierend auf einer Summe einer vorgegebenen Druckmarge und des gemessenen Drucks zu erzeugen, **dadurch gekennzeichnet, dass** die Steuerung dazu ausgelegt ist, ein Statussignal (S) zu empfangen, das einen Zustand eines Rückschlagventils des Hydrauliksystems an einer Ausgangsseite der Hydraulikpumpe angibt, und den drehmomentgesteuerten Elektroantrieb als Reaktion auf eine Situation, in der das Rückschlagventil geschlossen ist, zu stoppen.

2. Lastfühlendes Steuersystem nach Anspruch 1, wobei der mindestens eine Drucksensor einer von zwei oder mehr Drucksensoren ist, die dazu ausgelegt sind, Drücke von zwei oder mehr Hydraulikzylindern des Hydrauliksystems zu messen, und die Steuerung dazu ausgelegt ist, ein Maximum der gemessenen Drücke auszuwählen und die Drehmomentreferenz basierend auf einer Summe der vorgegebenen Druckmarge und dem Maximum der gemessenen Drücke zu erzeugen.

3. Lastfühlendes Steuersystem nach Anspruch 1 oder 2, wobei der drehmomentgesteuerte Elektroantrieb eine elektrische Wechselstrommaschine (109) und einen Leistungswandler (110), der dazu ausgelegt ist, das von der elektrischen Wechselstrommaschine erzeugte Drehmoment zu steuern, umfasst.

4. Hydrauliksystem, umfassend:
- mindestens einen Hydraulikzylinder (111-113), der dazu ausgelegt ist, mindestens einen Aktor anzutreiben,
- eine Hydraulikpumpe (114), die ausgelegt ist, Hydraulikflüssigkeit zu dem mindestens einen Hydraulikzylinder zu pumpen,
- ein Ventilsystem (115), das dazu ausgelegt ist, einen Fluss der Hydraulikflüssigkeit zu dem mindestens einen Hydraulikzylinder gemäß Steueraktionen, die an das Ventilsystem gerichtet sind, zu steuern,
- ein Rückschlagventil (116) auf einer Ausgangsseite der Hydraulikpumpe, und
- ein lastfühlendes Steuersystem nach einem der Ansprüche 1-3, das zum Antreiben der Hydraulikpumpe ausgelegt ist.

5. Hydrauliksystem nach Anspruch 4, wobei der mindestens eine Hydraulikzylinder einer von zwei oder mehr Hydraulikzylindern ist, die dazu ausgelegt sind, zwei oder mehr Aktoren anzutreiben, und die Hydraulikpumpe dazu ausgelegt ist, Hydraulikflüssigkeit zu den zwei oder mehr Hydraulikzylindern zu pumpen, das Ventilsystem dazu ausgelegt ist, einen Fluss der Hydraulikflüssigkeit zu den zwei oder mehr Hydraulikzylindern zu steuern, und das lastfühlende Steuersystem Anspruch 2 entspricht.

6. Hydrauliksystem nach Anspruch 4, wobei das Rückschlagventil ein steuerbares Rückschlagventil ist, das einen Steueraktor umfasst, der betreibbar ist, das steuerbare Rückschlagventil zu zwingen, einen Fluss in einer umgekehrten Richtung des steuerbaren Rückschlagventils zu ermöglichen.

7. Hydrauliksystem nach einem der Ansprüche 4-6, wobei die Hydraulikpumpe eine Konstantvolumen-Hydraulikpumpe ist.

8. Hydrauliksystem nach einem der Ansprüche 4-7, wobei die Hydraulikpumpe eine Schrägachsenpumpe ist.

9. Hydrauliksystem nach einem der Ansprüche 4-7, wobei die Hydraulikpumpe eine Radialkolbenpumpe ist.

10. Hydrauliksystem nach einem der Ansprüche 4-7, wobei die Hydraulikpumpe eine Getriebepumpe ist.

11. Hydrauliksystem nach einem der Ansprüche 4-7, wobei die Hydraulikpumpe eine Drehschieberpumpe ist.

12. Verfahren zur Steuerung eines Hydrauliksystems, wobei das Verfahren umfasst:
- Messen (201) mindestens eines Drucks des Hydrauliksystems, und
- Antreiben (203) einer Hydraulikpumpe des Hydrauliksystems mit einem drehmomentgesteuerten Elektroantrieb,
wobei der gemessene mindestens eine Druck ein Druck mindestens eines Hydraulikzylinders des Hydrauliksystems ist, und das Verfahren Erzeugen (202) einer Drehmomentreferenz für den drehmomentgesteuerten Elektroantrieb basierend auf einer Summe einer vorgegebenen Druckmarge und dem gemessenen Druck umfasst, **dadurch gekennzeichnet, dass** das Verfahren Empfangen eines Signals, das einen Zustand eines Rückschlagventils des Hydrauliksystems an einer Ausgangsseite der Hydraulikpumpe angibt, und Stoppen des drehmomentgesteuerten Elektroantriebs als Reaktion auf eine Situation, in der das Rückschlagventil geschlossen ist, umfasst.

13. Verfahren nach Anspruch 12, wobei das Messen des Drucks des mindestens eines Hydraulikzylinders Teil einer Aktivität ist, die das Messen von Drücken von zwei oder mehr Hydraulikzylindern des Hydrauliksystems umfasst, und das Verfahren Auswählen eines Maximums der gemessenen Drücke und Erzeugen der Drehmomentreferenz basierend auf einer Summe der vorgegebenen Druckmarge und dem Maximum der gemessenen Drücke umfasst.

## Revendications

1. Système de commande de détection de charge pour commander un système hydraulique, le système de commande de détection de charge comprenant :
- au moins un capteur de pression (101 - 106) configuré pour mesurer au moins une pression du système hydraulique, et
- un entraînement électrique à asservissement de couple (107) configuré pour entraîner une pompe hydraulique du système hydraulique,
dans lequel l'au moins une pression mesurée est une pression d'au moins un vérin hydraulique du système hydraulique, et le système de commande de détection de charge comprend une commande (108) configurée pour produire une référence de couple (T_{ref}) pour l'entraînement électrique à asservissement de couple en se basant sur une somme d'une marge de pression prédéterminée et la pression mesurée, **caractérisé en ce que** la commande est configurée pour recevoir un signal de statut (S) indiquant un état d'un clapet de non-retour du système hydraulique sur un côté sortie de la pompe hydraulique, et pour arrêter l'entraînement électrique à asservissement de couple en réponse à une situation dans laquelle le clapet de non-retour est fermé.

2. Système de commande de détection de charge selon la revendication 1, dans lequel l'au moins un capteur de pression est l'un de deux capteurs de pression ou plus configuré pour mesurer des pressions de deux vérins hydrauliques ou plus du système hydraulique, et la commande est configurée pour sélectionner un maximum des pressions mesurées et pour produire la référence de couple en se basant sur une somme de la marge de pression prédéterminée et le maximum des pressions mesurées.

3. Système de commande de détection de charge selon la revendication 1 ou 2, dans lequel l'entraînement électrique à asservissement de couple comprend une machine électrique à courant alternatif (109) et un convertisseur de puissance (110) configuré pour commander le couple produit par la machine électrique à courant alternatif.

4. Système hydraulique comprenant :
- au moins un vérin hydraulique (111-113) configuré pour entraîner au moins un actionneur,
- une pompe hydraulique (114) configurée pour pomper du fluide hydraulique vers l'au moins un vérin hydraulique,
- un système de clapet (115) configuré pour commander un flux du fluide hydraulique vers l'au moins un vérin hydraulique conformément à des actions de commande dirigées vers le système de clapet,
- un clapet de non-retour (116) sur un côté sortie de la pompe hydraulique, et
- un système de commande de détection de charge selon l'une quelconque des revendications 1 - 3 et configuré pour entraîner la pompe hydraulique.

5. Système hydraulique selon la revendication 4, dans lequel l'au moins un vérin hydraulique est l'un de deux vérins hydrauliques ou plus configurés pour entraîner deux actionneurs ou plus, la pompe hydraulique est configurée pour pomper du fluide hydraulique vers les deux vérins hydrauliques ou plus, le système de clapet est configuré pour commander les flux du fluide hydraulique vers les deux vérins hydrauliques ou plus, et le système de commande de détection de charge est selon la revendication 2.

6. Système hydraulique selon la revendication 4, dans lequel le clapet de non-retour est un clapet de non-retour pouvant être commandé comprenant un actionneur de commande pouvant fonctionner pour commander le clapet de non-retour pouvant être commandé pour permettre un flux dans une direction inverse du clapet de non-retour pouvant être commandé.

7. Système hydraulique selon l'une quelconque des revendications 4 - 6, dans lequel la pompe hydraulique est une pompe hydraulique à volume constant.

8. Système hydraulique selon l'une quelconque des revendications 4 - 7, dans lequel la pompe hydraulique est une pompe hydraulique à axe plié.

9. Système hydraulique selon l'une quelconque des revendications 4 - 7, dans lequel la pompe hydraulique est une pompe à pistons radiaux.

10. Système hydraulique selon l'une quelconque des revendications 4 - 7, dans lequel la pompe hydraulique est une pompe à engrenages.

11. Système hydraulique selon l'une quelconque des revendications 4 - 7, dans lequel la pompe hydraulique est une pompe à aube rotative.

12. Procédé de commande d'un système hydraulique, le procédé comprenant :
- de mesurer (201) au moins une pression du système hydraulique, et
- d'entraîner (203) une pompe hydraulique du système hydraulique avec un entraînement électrique à asservissement de couple,
dans lequel l'au moins une pression mesurée est une pression d'au moins un vérin hydraulique du système hydraulique, et le procédé comprend de produire (202) une référence de couple pour l'entraînement électrique à asservissement de couple en se basant sur une somme d'une marge de pression prédéterminée et la pression mesurée, **caractérisé en ce que** le procédé comprend de recevoir un signal indiquant un état d'un clapet de non-retour du système hydraulique sur un côté sortie de la pompe hydraulique, et d'arrêter l'entraînement électrique à asservissement de couple en réponse à une situation dans laquelle le clapet de non-retour est fermé.

13. Procédé selon la revendication 12, dans lequel la mesure de la pression de l'au moins un vérin hydraulique fait partie d'une activité qui comprend de mesurer des pressions de deux vérins hydrauliques ou plus du système hydraulique, et le procédé comprend de sélectionner un maximum des pressions mesurées et de produire la référence de couple en se basant sur la somme de la marge de pression prédéterminée et le maximum des pressions mesurées.
